# EUROPÄISCHE PATENTSCHRIFT

(11) **EP 1 015 095 B1**
(45) Veröffentlichungstag und Bekanntmachung des Hinweises auf die Patenterteilung: **13.06.2001**
(21) Anmeldenummer: 97944791.9
(22) Anmeldetag: 25.08.1997
(51) Int. Cl.: B01D 46/24, B01D 29/21

(54) **FILTERELEMENT MIT KUNSTSTOFF-FILTERMANTEL**
FILTER ELEMENT WITH PLASTIC FILTER CASING
ELEMENT FILTRANT AVEC ENVELOPPE DE FILTRE EN MATIERE PLASTIQUE

(43) Veröffentlichungstag der Anmeldung: 05.07.2000
(73) Patentinhaber: Hydac Filtertechnik GmbH, 66280 Sulzbach/Saar (DE)
(72) Erfinder: ALTMEYER, Gerd, D-66386 St. Ingbert (DE); MEES, Harald, D-66822 Lebach (DE); MOHR, Herbert, D-66589 Merchweiler (DE); ZENNER, Ute, D-66386 St. Ingbert (DE)
(74) Vertreter: Bartels, Martin Erich Arthur
(86) Internationale Anmeldenummer: EP9704630
(87) Internationale Veröffentlichungsnummer: WO9910080

(56) Entgegenhaltungen:
- EP-A- 0 213 930
- EP-A- 0 662 340
- WO-A-79/00978
- DE-A- 4 312 705
- DE-A- 19 538 185
- GB-A- 1 411 607
- GB-A- 2 007 992

## Beschreibung

Die Erfindung betrifft ein Filterelement mit einem Stützrohr, das von einer Filtermatte umgeben ist, die wiederum von einem einen Filterraum begrenzenden Filtermantel mit Durchlässen umschlossen ist und zwei stirnseitig angeordnete Endkappen aufweist.

Dahingehende Filterelemente (DE 4312705A1) sind in einer Vielzahl von Ausführungsformen bekannt und dienen in der Regel dazu, verschmutztes Fluid, insbesondere in Form von Hydrauliköl von den Verschmutzungen zu befreien, die von der Filtermatte des Filterelementes aufgefangen und aus dem Fluidstrom zurückbehalten werden. Ist die Filtermatte vollständig verschmutzt, ist diese gegen eine neue auszutauschen oder das Filterelement als Ganzes vollständig gegen ein neues zu ersetzen. Über mindestens eine der beiden Endkappen dringt über eine entsprechende Eingangsöffnung das verschmutzte Fluid in das Filterelement und durchströmt dieses für einen Abreinigungsvorgang von außen nach innen, wobei die Filtermatte zwischen dem Stützrohr mit Durchlässen und dem ebenfalls mit Durchlässen versehenen Filtermantel angeordnet ist. Um eine hohe Schmutzaufnahmekapazität zu erreichen, ist die Filtermatte häufig plissiert, also in Falten um das Stützrohr gelegt. Die andere Endkappe kann mit einem Sicherheits- oder Bypassventil ausgestattet sein und kann eine Umgehung des Filterelementes vom Fluidstrom her erlauben, sofern die Filtermatte vollständig verschmutzt einen Fluiddurchlaß nicht mehr erlaubt.

Bei dem bekannten Filterelement, nach der DE 4312705 A1 ist der zylindrische Filtermantel, der die Filtermatte umgibt, aus einem Streckmetallgewebe gebildet, wobei die beiden aufeinanderzugebogenen Enden nach innen abgekantet in einen Halteclip münden, der die Grundlage für ein Klebstoffbett bildet, wobei der Klebstoff aus einem Zweikomponentenkleber besteht. Aufgrund der Vielzahl der damit einhergehenden Bauteile sowie Fertigungsschritte ist das bekannte Filterelement teuer in der Herstellung. Desweiteren gibt es Entsorgungsprobleme bei unbrauchbar werdenden Filterelementen, insbesondere im Hinblick auf den angesprochenen Streckmetallmantel aus Metallgewebe. Ein abschließendes Entsorgen des Filterelementes, beispielsweise indem dieses als Ganzes in einer entsprechenden Schredder-Anlage aufgearbeitet wird, ist mithin nicht möglich und die Recycelfähigkeit ist auf einzelne Komponenten des Filterelementes beschränkt.

Durch die GB-A-2.007.992 ist ein gattungsgemäßes Filterelement bekannt, mit einem Filtermantel, der aus einem ebenen Zuschnitt gebildet ist und dessen einander zugebogenen Enden unter Bildung eines Filterraumes über eine durch ein Heißklebeverfahren hergestellte Verbindungsnaht fest miteinander verbunden sind. Um eine paßgenaue Anlage der Filtermatte mit dem inneren Stützrohr und dem zylindrischen Filtermantel zu erreichen, so daß auch bei Wechselbeanspruchungen die Filtermatte sicher im Filterelement abgestützt ist, wird bei der bekannten Lösung ein Schrumpfprozeß des äußeren Zylindermantels unter äußerer Wärmeeinwirkung durchgeführt, was zu thermisch schädlichen Belastungen für die Filtermatte führen kann.

Durch die GB-A-1.411.607 ist ein Filterelement mit einem inneren und/oder einem äußeren Stützrohr bekannt sowie stirnseitigen Endkappen, wobei das Stützrohr aus einem ebenen Zuschnitt aus Kunststoff gebildet ist und die einander zugebogenen, überlappenden Enden sind unter Bildung einer Verbindungsnaht miteinander verschweißt. Das Filtermaterial wird in Form eines Filterpapieres unter Bildung eines Hohlzylinders aufgerollt und derart in das Filtergehäuse eingesetzt. Hierbei treten Toleranzen auf, die eine sichere Abstützung der Filtermatte beeinträchtigen und die bekannte Lösung reagiert empfindlich auf Wechselbeanspruchungen.

Durch die DE-A-19538185 ist ein Filterelement für Gase oder Flüssigkeiten mit in der Form eines Ringes angeordnetem gefalteten Filtermaterial bekannt, das von außen nach innen durchströmbar ist und das zwischen einem inneren perforierten zylindrischen Tragkörper und einem perforierten zylindrischen Außenmantel angeordnet ist, der durch Biegen aus einem perforierten Flachmaterial hergestellt wird und dessen aneinander anschließenden Kanten miteinander verbunden sind. Zur Herstellung dieses Filterelementes wird das perforierte Flachmaterial in Form eines aus Kunststoff bestehenden Streifens schraubenförmig in die Form eines Zylinders gewickelt und dessen schraubenlinienförmig verlaufende, aneinander anschließende Kanten durch eine Vergußmasse aus Kunststoff miteinander verbunden. Auch hier wird der Ring aus sternförmig gefaltetem Filtermaterial zwischen dem inneren zylindrischen Tragkörper und dem äußeren zylindrischen Mantel mit Abstand angeordnet, was wiederum die Empfindlichkeit gegenüber Wechselbeanspruchungen erhöht.

Ausgehend von diesem Stand der Technik liegt der Erfindung die Aufgabe zugrunde, ein Filterelement zu schaffen, das preisgünstig herstellbar ist, das die Möglichkeit eines Recycelns für das Filterelement als Ganzes erhöht und das gegen Wechselbeanspruchungen beim Filtern unempfindlich ist. Eine dahingehende Aufgabe löst ein Filterelement mit den Merkmalen des Anspruches 1 in seiner Gesamtheit.

Dadurch, daß gemäß dem kennzeichnenden Teil des Anspruches 1 die zum Zylinder aufgefaltete Filtermatte, die auf das Stützrohr aufschiebbar ist, einen größeren Außendurchmesser aufweist als der Innendurchmesser des Filtermantels und daß die Filtermatte an einem ihrer stirnseitigen Enden derart zusammengefaßt wird, daß ein Konus entsteht, der das Einführen in den zylindrischen Filtermantel erleichtert, ist hierdurch eine besonders vorteilhafte und kostengünstige Fertigung des Filterelementes erreicht. Des weiteren ergibt sich ein paßgenauer Einbau der Filtermatte innerhalb des Filterelementes, so daß sich die Filtermatte unmittelbar am Filtermantel und am Stützrohr abstützen kann und derart abgestützt unempfindlich gegen Wechselbeanspruchungen ist.

Dadurch, daß die aufeinanderzugebogenen Enden unter Bildung des Filterraumes über eine durch ein Heißklebe-, Heizelemente- oder Ultraschall-schweißverfahren hergestellte Verbindungsnaht fest miteinander verbunden sind, kann auf den Längsnahtclip zur Bildung der Verbindungsnaht verzichtet werden und auch ein kostenintensives Umkanten der Enden des Filtermantels entfällt. Des weiteren muß nicht abgewartet werden, bis der Zweikomponentenkleber im durch den Längsnahtclip gebildeten wannenartigen Aufnahmekanal ausgehärtet ist. Durch die Verwendung eines Kunststoffmantels als Filtermantel läßt sich durch geeignete Materialauswahl des Kunststoffes dieser ohne weiteres heißkleben oder über ein Ultraschallschweißverfahren verarbeiten, wobei eine hohe Festigkeit der Querverbindungsnaht auch im späteren Betrieb gewährleistet ist. Da als Filtermantel nur noch Kunststoffmaterial eingesetzt ist, läßt sich dieser später leicht entsorgen und recyceln; gegebenenfalls zusammen mit dem gesamten Filterelement durch Schreddern oder dergleichen.

Bei einer besonders bevorzugten Ausführungsform des erfindungsgemäßen Filterelements ist die Filtermatte plissiert und weist Kunststoffmaterialen auf, die es erlauben, unter Bildung einer weiteren Filterfalte und unter bündigem Aneinanderlegen der Mattenenden diese über ein Ultraschallschweißverfahren fest miteinander zu verbinden. Sofern auch die Enden des Filtermantels über ein Ultraschallschweißverfahren miteinander verbunden werden, läßt sich so mit einem Herstellverfahren ein Großteil der relevanten Verbindungsstellen für das Filterelement herstellen, was kostengünstig ist.

Bei einer weiteren besonders bevorzugten Ausführungsform bestehen sämtliche Bauteile des Filterelementes aus Kunststoffmaterialien, so daß das Filterelement als Ganzes in einer Schredderanlage recycelbar ist.

lm folgenden wird das erfindungsgemäße Filterelement anhand der Zeichnung näher erläutert.
Es zeigen in prinzipieller und nicht maßstäblicher Darstellung die
- Fig. 1: eine perspektivische Ansicht auf das Filterelement;
- Fig. 2: in perspektivischer Darstellung einen die plissierte Filtermatte betreffenden Herstellerschritt;
- Fig. 3 und 4: einen Bildausschnitt betreffend die mittels Ultraschallschweißverfahren bzw. Heißklebeverfahren hergestellte Verbindungsnaht zwischen den beiden Enden des Filtermantels;
- Fig. 5: in der Art einer Zusammenbauzeichnung die Komponenten des Filterelementes in Form des Filtermantels, der Filtermatte sowie des Stützrohres.

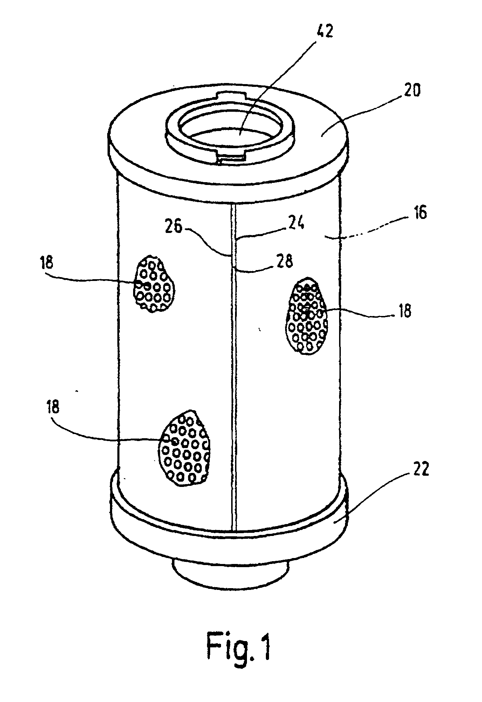

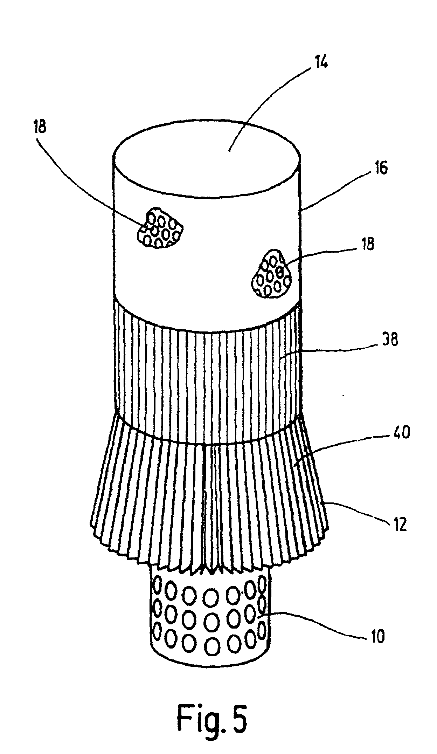

Das Filterelement nach Fig. 1 weist ein fluiddurchlässiges Stützrohr 10 (vgl. Fig. 5) auf, das von einer Filtermatte 12 umgeben ist, die wiederum von einem einen Filterraum 14 begrenzenden Filtermantel 16 mit Durchlässen 18 umschlossen ist und zwei stirnseitig angeschlossene Endkappen 20, 22 (vgl. Fig. 1) aufweist.

Das Stützrohr 10 ist aus einem zylinderischen Rohrabschnitt gebildet und weist durchgehende kreisrunde Durchlässe für das Fluid auf. Die Längsenden des Stützrohres 10 sind über eine Schweißnaht (nicht näher dargestellt) verbunden.

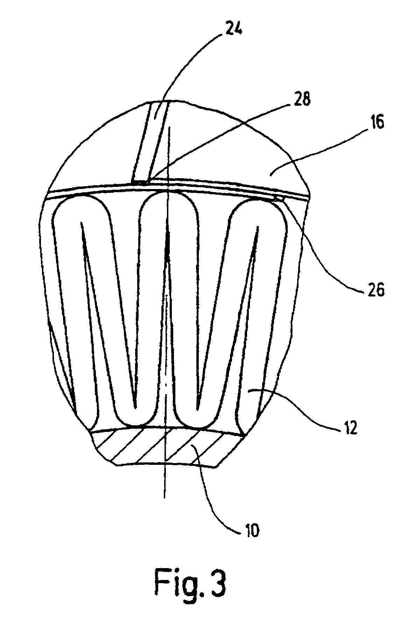

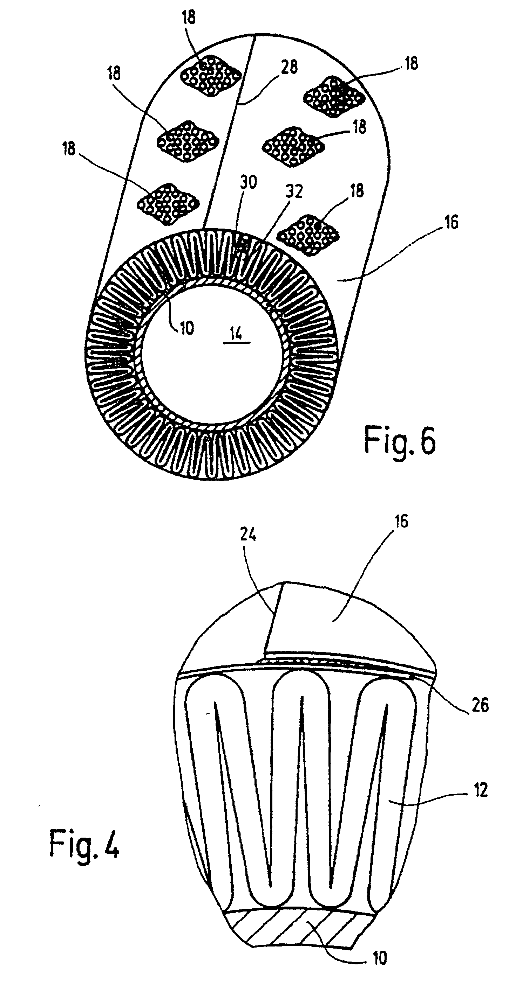

An seinen beiden Stirnseiten ist das Stützrohr 10 offen. Der Filtermantel 16 besteht aus einem Kunststoffmantel, insbesondere aus einer Polyamid- oder Polyäthylenverbindung, mit guten Heißklebeeigenschaften und/oder einer guten Verarbeitbarkeit beim Ultraschallschweißen. Der aus Kunststoff gebildete Filtermantel ist zunächst aus einem ebenen Zuschnitt (nicht dargestellt) gebildet, dessen beide aufeinanderzugebogenen Enden 24, 26 unter Bildung des Filterraumes 14 miteinander über die bereits angesprochenen Verfahren hergestellte Verbindungsnaht 28 fest miteinander verbunden sind. Die durch das Ultraschallschweißverfahren hergestellte Verbindungsnaht 28 ist in der Fig. 3 dargestellt, wohingegen die nach dem Heißklebeverfahren hergestellte Hotmelt-Verbindungsnaht 28 Gegenstand der Darstellung nach Fig. 4 ist. Gemäß den Darstellungen nach den Fig. 3 und 4 wurde jedes Mal eine Überlappung im Bereich der beiden Enden 24 und 26 des Filtermantels 16 herbeigeführt. Dies ist insbesondere dann wichtig, wenn für das Heißklebeverfahren die erzielte Klebeverbindung (Hotmelt) eine größere Auflagefläche für einen festen Halt benötigt als bei der hergestellten Verbindung nach dem Ultraschallschweißverfahren.

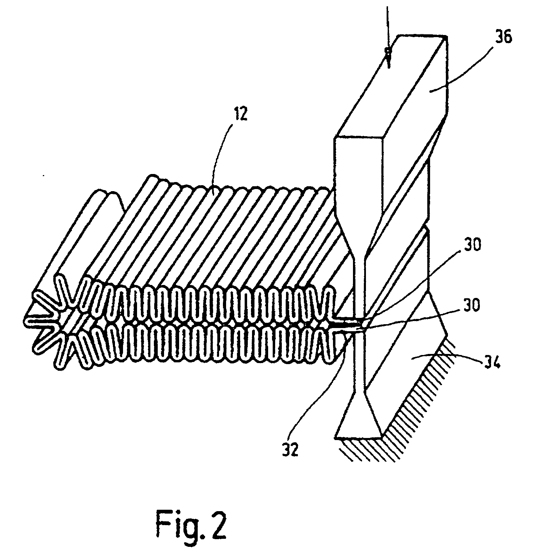

Wie insbesondere die Fig. 2 zeigt, ist die Filtermatte 12 plissiert, also gefaltet ausgebildet, und weist die in einem Stützgewebe (nicht näher dargestellt) üblichen Kunststoffmaterialien auf, die zum Filtern eines Fluids und mithin zum Abreinigen von Verschmutzungen geeignet ist. Zum Herstellen einer Filtermatte 12 mit zylindrischem Innenquerschnitt, der den Filterraum 14 begrenzt, werden die beiden freien Enden 30 stoßartig aufeinander gelegt, wobei eine weitere Filterfalte 32 gebildet wird. Anschließend werden die Enden 30 über ein Ultraschallschweißverfahren fest miteinander verbunden, wobei das untere Werkzeug 34 feststeht und das obere 36 in der gezeigten Pfeilrichtung die Zustellbewegung vornimmt. Nach Abschluß des Schweißverfahrens sind die beiden Enden 30 der Filtermatte 12 unter Bildung einer weiteren Filterfalte 32 fest miteinander verbunden und die bandartig aufeinander liegenden einzelnen Filterfalten 32 können voneinander entfernt werden und bilden dann den hohlzylindrischen Filterraum aus. Um einen Aufbau des Filterelementes zu erreichen, wie in der Fig. 6 dargestellt ist, wird zunächst ein Zusammenbau der Einzelkomponenten gemäß der Darstellung nach der Fig. 5 vorgenommen. Dabei wird zunächst die zum Zylinder aufgefaltete Filtermatte 12, die auf das Stützrohr 10 aufschiebbar ist, mit einem größeren Außendurchmesser versehen als der Innendurchmesser des zugeordneten Filtermantels 16. Die Filtermatte 12 wird dann wie in der Fig. 5 angedeutet an ihrem oberen stirnseitigen Ende 38 derart zusammengefaßt, daß ein Konus 40 ensteht, der das Einführen in den zylindrischen Filtermantel 16 erleichtert und der wegfällt, sobald die Filtermatte 12 insgesamt im geschlossenen Filtermantel 16 eingeschoben ist.

Um eine vollständige Recycelbarkeit des Filterelementes zu gewährleisten, ist vorgesehen, daß die Filtermatte 12 und der Filtermantel 16 aus einem dahingehenden recycelbaren Kunststoffmaterial bestehen. Des weiteren kann vorgesehen sein, daß die beiden Endkappen 20, 22 aus einem recycelbaren Kunststoffmaterial gebildet sind. Ebenso kann in Erweiterung dieses Gedankens das Stützrohr 10 aus einem recycelbaren Kunststoffmaterial bestehen. Die Durchlässe 18 im Kunststoff-Filtermantel 16 sind durch Ausstanzungen gebildet, die insbesondere einen kreisrunden Querschnitt aufweisen. Das verschmutzte Fluid passiert das Filterelement von außen nach innen in den. Filterraum 14, wobei es zu einer Abreinigung kommt beim Durchtritt durch die plissierte Filtermatte 12, die die Verschmutzung aufnimmt, wonach das gereinigte Fluid durch die Auslaßöffnung 42 der in Blickrichtung auf die Fig.1 gesehen oberen Endkappe 20 strömt. In Hinblick auf die in Fig. 1 gesehene untere Endkappe 22 kann nach unten hin in einem abgesetzten Vorsprung ein Bypass- oder Sicherheitsventil (nicht dargestellt) aufgenommen sein. Zum Erzeugen der Verbindungsnaht 28 des Filtermantels 16 wird dieser auf ein zylindrisches Hilfswerkzeug aufgespannt und dann von außen her mit dem Ultraschallschweißwerkzeug unter Herstellung der Verbindungsnaht 28 bearbeitet.

Die Filtermatte 12 kann für Niederdruck oder Hochdruck ausgelegt sein. in beiden Fällen kann sie Polyester- oder Polyamid-Materialien sowie Glasfaserpapier aufweisen. Reinigbare Filtermatten weisen darüber hinaus Drahtgewebematerialien auf. Für den Filtermantel 16 kann das Perforationsmaterial eine Lochgröße von 1,25 mm aufweisen mit Lochabständen in Vorschubrichtung von 1,9 mm und in horizontaler Richtung (Mitte/Mitte) von 3,25 mm. Derart ergibt sich eine offene Fläche von 38 % für den Fluiddurchlaß.

Anstelle des in der Fig.2 mit 36 bezeichneten Ultraschall-Schweißwerkzeuges kann auch ein Heizelement treten, das eine Verschweißung des Kunststoffmaterials für die Filtermatte 12 bewirkt und ebenso für das Herstellen der Verbindungslängsnaht 28 eingesetzt werden kann.

Das vorstehend näher bezeichnete Filterelement ist aufgrund seines Aufbaus kostengünstig herstellbar und weitgehend recycelbar. Insbesondere läßt sich das Filterelement, sofern es vollständig aus Kunststoff aufgebaut ist, als Ganzes in Schredderanlagen oder dergleichen entsorgen.

## Patentansprüche

1. Filterelement mit einem fluiddurchlässigen Stützrohr (10), das von einer Filtermatte (12) umgeben ist, die wiederum von einem einen Filterraum (14) begrenzenden Filtermantel (16) mit Durchlässen (18) umschlossen ist und mit zwei stirnseitig angeordneten Endkappen (20,22), wobei der Filtermantel (16) aus einem Kunststoffmantel besteht, der aus einem ebenen Zuschnitt gebildet ist, dessen beide aufeinanderzugebogenen Enden (24,26) unter Bildung des Filterraumes (14) über eine durch ein Heißklebe-, Heizelement- oder Ultraschall-Schweißverfahren hergestellte Verbindungsnaht (28) fest miteinander verbunden sind, **dadurch gekennzeichnet**, daß die zum Zylinder aufgefaltete Filtermatte (12), die auf das Stützrohr (10) aufschiebbar ist, einen größeren Außendurchmesser aufweist als der Innendurchmesser des Filtermantels (16) und daß die Filtermatte (12) an einem ihrer stirnseitigen Enden (38) derart zusammengefaßt wird, daß ein Konus (40) entsteht, der das Einführen in den zylindrischen Filtermantel (16) erleichtert.

2. Filterelement nach Anspruch 1, dadurch gekennzeichnet, daß die Filtermatte (12) plissiert ist und Kunststoffmaterialien aufweist, die es erlauben, unter Bildung einer weiteren Filterfalte (32) und unter bündigem Aneinanderlegen der Mattenenden (30), diese über ein Ultraschall-schweißverfahren oder mittels Heizelementen fest miteinander zu verbinden.

3. Filterelement nach Anspruch 1 oder 2, dadurch gekennzeichnet, daß die Filtermatte (12) und der Filtermantel (16) aus einem recycelbaren Kunststoffmaterial besteht.

4. Filterelement nach Anspruch 3, dadurch gekennzeichnet, daß die beiden Endkappen (20, 22) aus einem recylebaren Kunststoffmaterial bestehen.

5. Filterelement nach Anspruch 3 oder 4, dadurch gekennzeichnet, daß das Stützrohr (10) aus einem recycelbaren Kunststoffmaterial besteht.

6. Filterelement nach einem der Ansprüche 1 bis 5, dadurch gekennzeichnet, daß die Durchlässe (18) im Kunststoff-Filtermantel (16) durch Ausstanzungen, insbesondere mit kreisrunden Querschnitt gebildet sind.

7. Filterelement nach einem der Ansprüche 1 bis 6, dadurch gekennzeichnet, daß die Verbindungsnaht (28) durch die stoßartige Berührstelle der Enden (24, 26) des Filtermantels (16) oder einen überlappenden Überdekkungsbereich gebildet sind.

## Claims

1. A filter element with a water-permeable centre tube (10) surrounded by a filter mat (12) which in turn is enclosed by a filter casing (16) with apertures (18) which delineates the filter space (14), and with two end covers (20, 22) arranged at the ends, the filter casing (16) consisting of a plastic jacket formed from one plain blank the two ends of which (24, 26) are bent onto each other and are connected firmly together by a joining weld (28) produced in a hot bonding, heating element or supersonic welding process, while forming the filter space (14), characterised by the fact that the filter mat (12), folded into a cylinder, is slidable over the centre tube (10), has an outside diameter larger than the inside diameter of the filter casing (16), and that the filter mat (12) is gathered together at its end face ends (38) to form a cone (40) which facilitates inserting it into the cylindrical filter casing (16).

2. A filter element according to Claim 1, characterised by the fact that the filter mat (12) is pleated and contains plastic materials which make it possible, while forming a further filter fold (32) and placing the ends of the mat (30) flush over each other, to bond them firmly together by supersonic welding or by means of heating elements..

3. A filter element according to Claim 1 or 2, characterised by the fact that the filter mat (12) and the filter casing (16) consist of recyclable plastic.

4. A filter element according to Claim 3, characterised by the fact that the two end covers 20, 22) consist of a recyclable plastic.

5. A filter element according to Claim 3 or 4, characterised by the fact that the centre tube (10) consists of a recyclable plastic.

6. A filter element according to one of the Claims 1 to 5, characterised by the fact that the apertures (18) are formed in the plastic filter casing (16) by punching and in particular have a circular cross section.

7. A filter element according to one of the Claims 1 to 6, characterised by the fact that the joining weld (28) is formed by the abutting contact point of the ends (24, 26) of the filter casing (16) or an overlapping covering area.

## Revendications

1. Cartouche filtrante comprenant un tube support (10) laissant passer le fluide, qui est enveloppé par une natte filtrante (12), qui est elle-même entourée d'une gaine de filtre (16), délimitant un compartiment de filtre (14), qui comporte des trous (18) et qui est munie de deux caches d'extrémité (20, 22) posés sur les faces frontales, la gaine de filtre (16) étant réalisée en matière plastique, qui est formée dans un flan plat dont les deux extrémités (24, 26) incurvées l'une vers l'autre sont assemblées de manière inamovible l'une avec l'autre en formant une ligne de jointure (28) réalisée au moyen d'un procédé de thermocollage, un procédé de soudage par éléments thermiques ou par ultrasons, caractérisée en ce que la natte filtrante (12) dépliée en forme de cylindre, qui peut coulisser sur le tube support (10), présente un diamètre extérieur plus grand que le diamètre intérieur de la gaine de filtre (16) et en ce que la natte filtrante (12) est jointe sur l'une de ses extrémités frontales (38) de manière à former un cône (40) qui facilite l'introduction dans la gaine de filtre (16) cylindrique.

2. Cartouche filtrante selon la revendication 1, caractérisée en ce que la natte filtrante (12) est plissée et est réalisée dans des matières plastiques qui permettent, en formant un pli de filtre supplémentaire (32) et par un assemblage affleuré des extrémités (30) de la natte, d'assembler de manière inamovible celles-ci par l'intermédiaire d'un procédé de soudage par ultrasons ou par éléments thermiques.

3. Cartouche filtrante selon la revendication 1 ou 2, caractérisée en ce que la natte filtrante (12) et la gaine de filtre (16) sont réalisées dans une matière plastique recyclable.

4. Cartouche filtrante selon la revendication 3, caractérisée en ce que les deux caches d'extrémité (20, 22) sont réalisés dans une matière plastique recyclable.

5. Cartouche filtrante selon la revendication 3 ou 4, caractérisée en ce que le tube support (10) est réalisé dans une matière plastique recyclable.

6. Cartouche filtrante selon l'une quelconque des revendications 1 à 5, caractérisée en ce que les trous (18) dans la gaine de filtre (16) en matière plastique sont réalisés par découpage, en particulier avec une section circulaire.

7. Cartouche filtrante selon l'une quelconque des revendications 1 à 6, caractérisée en ce que la ligne de jointure (28) est formée par la zone de contact bout à bout des extrémités (24, 26) de la gaine de filtre (16) ou par une zone de chevauchement.
